# EUROPEAN PATENT SPECIFICATION

(11) **EP 1 138 640 B1**
(45) Date of publication and mention of the grant of the patent: **01.02.2006**
(21) Application number: 01108090.0
(22) Date of filing: 29.03.2001
(51) Int. Cl.: C03B 19/14, C03B 32/00, C03C 23/00, C03C 3/06, C03C 4/00

(54) **Method for heat treating a synthetic quartz glass body for optical use and heat treatment apparatus for the same**
Verfahren zur thermischen Behandlung von einem aus synthetischem Quarzglas hergestellten Körper für optische Zwecken und Vorrichtung zur Durchführung dieses Verfahrens
Procédé de traitement thermique d'un corps verre de quartz synthétique pour une utilisation optique et dispositif pour mettre en oeuvre ce procédé.

(30) Priority: 29.03.2000 JP 2000090157
(43) Date of publication of application: 04.10.2001
(73) Proprietor: Heraeus Quarzglas GmbH & Co. KG, 63450 Hanau (DE); SHIN-ETSU QUARTZ PRODUCTS CO., LTD., Shinjuku-ku, Tokyo 160-0023 (JP)
(72) Inventor: Ueda, Tetsuji, Koriyama-shi, Fukushima 963-0101 (JP); Fujinoki, Akira, Koriyama-shi, Fukushima 963-0701 (JP); Nishimura, Hiroyuki, Koriyama-shi, Fukushima 963-8833 (JP)
(74) Representative: Staudt, Armin Walter

(56) References cited:
- EP-A- 0 921 104
- PATENT ABSTRACTS OF JAPAN vol. 013, no. 011 (C-558), 11 January 1989 (1989-01-11) & JP 63 218522 A (TOSOH CORP), 12 September 1988 (1988-09-12)
- PATENT ABSTRACTS OF JAPAN vol. 1999, no. 01, 29 January 1999 (1999-01-29) & JP 10 279322 A (NIKON CORP), 20 October 1998 (1998-10-20)
- PATENT ABSTRACTS OF JAPAN vol. 011, no. 315 (C-451), 14 October 1987 (1987-10-14) & JP 62 100436 A (ASAHI GLASS CO LTD), 9 May 1987 (1987-05-09)
- PATENT ABSTRACTS OF JAPAN vol. 1996, no. 08, 30 August 1996 (1996-08-30) & JP 08 091857 A (TOSOH CORP), 9 April 1996 (1996-04-09)
- PATENT ABSTRACTS OF JAPAN vol. 1996, no. 07, 31 July 1996 (1996-07-31) & JP 08 081225 A (SUMITOMO METAL IND LTD), 26 March 1996 (1996-03-26)

## Description

### Field of the Invention

The present invention relates to a method for heat treating a synthetic quartz glass body for optical use. Such quartz glass bodies are highly homogeneous, having favorable high optical transmittance and high resistance against laser radiation, and they are suitable for use as an optical member in lithographic apparatuses working with an excimer laser. The present invention also relates to a heat treatment apparatus used for this method.

### Background of the Invention

Photolithography is a technology which comprises transferring the pattern provided on a photomask onto a wafer by using laser radiation. It is economically superior to other techniques using electron beams and X rays. Hence, it has been widely used heretofore in the steppers for producing semiconductor integrated circuits.

Recently, with an increase in the production of "Large Scale Integrated Circuits" (LSIs) with finer patterns and an increase in the degree of integration, light with still shorter wavelength is demanded for the exposure light source. Steppers using i-lines (365 nm in wavelength) capable of fabricating patterns with line widths in a range of from 0.4 to 0.5 µm or those using KrF excimer lasers (248.3 nm in wavelength) capable of patterning lines having a line width of from 0.25 to 0.35 µm have been practically used heretofore, and more recently, there is being developed a stepper using an ArF excimer laser (emitting light 193.4 nm in wavelength) for practical use, which is capable of patterning lines 0.13 to 0.2 µm in line width. Thus, it is demanded for the optical members for use in the apparatuses using ArF excimer laser lithography to satisfy requirements such as homogeneity, transmittance, resistance against laser radiation, etc., at high levels heretofore never realized.

As a material capable of satisfying such demands, high purity synthetic quartz glass is being used, and the optical transmittance and the resistance against laser radiations of such materials have been improved by optimizing the production conditions. At the same time, optical properties such as the homogeneity and birefringence are further increased. Among them, to improve the homogeneity and to reduce the birefringence, it is required to perform a heat treatment inclusive of gradual cooling (annealing treatment) during the production process of the optical member to remove the strain of the quartz glass. As a method of the heat treatment, generally employed was a method comprising maintaining the glass at high temperatures inside the heating furnace.

The hydrogen molecules dissolved inside a quartz glass contributes to the resistance against short wavelength radiations, and particularly, to the resistance against laser radiations. For instance, it is known that a drop in transmittance or a generation of fluorescent light, or an increase in refractive index of a quartz glass by exposure with an excimer laser can be suppressed for a long period when the quartz glass contains hydrogen molecules at an amount not lower than a certain level (see JP-A-Hei3-88743 and JP-A-Hei9-124337)

However, in the heat treatment described above, because quartz glass is exposed to high temperatures for a long time, there occurs a problem that the quantity of hydrogen molecules incorporated inside the quartz glass is lowered, thereby resulting in a decrease in resistance against laser radiations.

Furthermore, since the heat treatment above is commonly performed by holding the quartz glass inside a heating furnace (e.g., an electric furnace) for a long duration of time, there was found another problem of process contamination, because the quartz glass under treatment would catch up impurities such as the alkaline metal elements discharged or transferred from the furnace material of the heating furnace or the jigs, or from the atmosphere, etc. Since the metallic impurities incorporated in the quartz glass for optical use induce a drop in the transmittance and the resistance against laser radiations, the contamination due to metallic impurities, particularly Na, must be suppressed as low as possible to obtain an optical member suitable for use in laser lithographic apparatuses.

In order to overcome those problems in the heat treatment process above, there is proposed a method comprising performing the heat treatment by covering the object to be treated with a proper cover. In JP-A-Hei10-279322 it is proposed to cover the object to be treated with synthetic quartz glass to prevent the object to be treated from being contaminated. However, prevention of contamination is the only object of the invention, and no consideration is made to the lowering of the concentration of dissolved hydrogen molecules. In JP-A-HeiB-91857 is proposed a method for obtaining a highly homogeneous quartz glass, which comprises thermally treating the object to be treated by covering the object with a sheet or a powder of silica. However, similar to the case of JP-A-Hei10-279322, in this invention again, no consideration is made on the measures for lowering the concentration of dissolved hydrogen molecules. Furthermore, although there is known doping of hydrogen molecules as a method of recovering the lowered concentration of hydrogen molecules, this method requires a special step for doping, and this led to a longer time of production and to an increase in production cost.

EP 0 921 104 A1 relates to a method for producing a silica glass for an optical system. It is disclosed that an hydrogen doping treatment at temperatures higher than 800°C may generate reduction seeds on the surface of the silica glass product, which may promote diffusion of impurities. Therefore, it is suggested to anneal the product under an inert gas atmosphere at temperatures higher than 800 °C and to change to an hydrogen atmosphere at lower temperatures between 300°C and 800°C.

### Summary of the Invention

The present invention has been achieved in the light of the aforementioned problems, and an object of the present invention is to provide a method for heat treating a synthetic quartz glass body for optical use to provide it with improved transmitting properties and resistance against laser radiation, and a heat treatment apparatus for performing the method.

In general, the present invention provides for the heat treatment of an optical quartz glass body, wherein the heat treatment is conducted within an enclosed space with a SiO₂ powder surrounding the object. The SiO₂ powder has a relatively high surface area, and therefore tends to absorb impurities, such as alkaline metals, before they reach the quartz glass object. An enclosed vessel is preferably provided around the SiO₂ and optical quartz glass body during treatment, to contain the hydrogen and prevent external contamination. The SiO₂ powder has a relatively high initial hydrogen molecule concentration, e.g., a mean concentration of at least about 10¹⁹ molecules/cm³, which is higher than the desired end hydrogen concentration of the optical quartz glass object, e.g., 2 × 10¹⁷ molecules/cm³ or higher, and therefore the hydrogen concentration in the environment around the optical quartz glass object tends to impede loss of hydrogen from the optical quartz glass object during the heat treatment process.

The problems above are solved by a method for heat treating a synthetic quartz glass body for optical use, comprising heating the quartz glass body in a heating furnace while said quartz glass body is covered with an SiO₂ powder, wherein the SiO₂ powder has a mean dissolved hydrogen molecule concentration of 1 × 10¹⁹ molecules/cm³ or higher.

Preferably, the total weight of said SiO₂ powder accounts for 25 % or more of the weight of the synthetic quartz glass body.

More preferably, said SiO₂ powder is a synthetic SiO₂ powder containing 30 wt-ppb or less of Na.

Still more preferably, at least 95 % of the weight of said SiO₂ powder consists of particles having a diameter of 1,000 µm or less.

The invention also provides a heat treatment apparatus for heat treating of a synthetic quartz glass body for optical use, which comprises a heating furnace and a quartz glass vessel for the reception of the quartz glass body to be placed inside the heating furnace, said quartz glass vessel
a) has a volume of at least 1.5 times of the volume of the synthetic quartz glass body,
b) to be filled with an SiO₂ powder having a mean dissolved hydrogen molecule concentration of 1 × 10¹⁹ molecules/cm³ or higher and thus covering the surface of the synthetic quartz glass body,
c) is covered by a lid.

Preferably, the total weight of said SiO₂ powder accounts for 25 % or more of the weight of the synthetic quartz glass body.

More preferably, said SiO₂ powder is a synthetic SiO₂ powder containing 30 wt-ppb or less of Na.

Still more preferably, least 95 % of the weight of said SiO₂ powder consists of particles having a diameter of 1,000 µm or less.

### Brief Description of the Drawings

- **Fig. 1**: shows the vessel which constitutes the main portion of the heat treatment apparatus for the synthetic quartz glass for optical use according to the present invention together with SiO₂ powder and a synthetic quartz glass for optical use to be treated, wherein (A) shows a vertical cross section view, and Fig. 1(B) is a cross section view taken along line B-B in Fig. 1(A).
- **Fig. 2**: is a diagram showing an example of a temperature profile used in the heat treatment method for a synthetic quartz glass for optical use according to the present invention.

### Detailed Description of the Preferred Embodiments of the Invention

The heat treatment apparatus for a synthetic quartz glass for optical use according to the present invention is equipped with a heating furnace for use in the heat treatment of a synthetic quartz glass body that is the object to be treated. The heating furnace itself may be of any type of conventionally used heating furnaces, and the explanation therefor is omitted.

Furthermore, the heat treatment apparatus for a synthetic quartz glass for optical use according to the present invention comprises a vessel made of quartz glass and having a lid. In performing the heat treatment above, this lidded vessel is placed inside the heating furnace with the synthetic quartz glass body being enclosed therein.

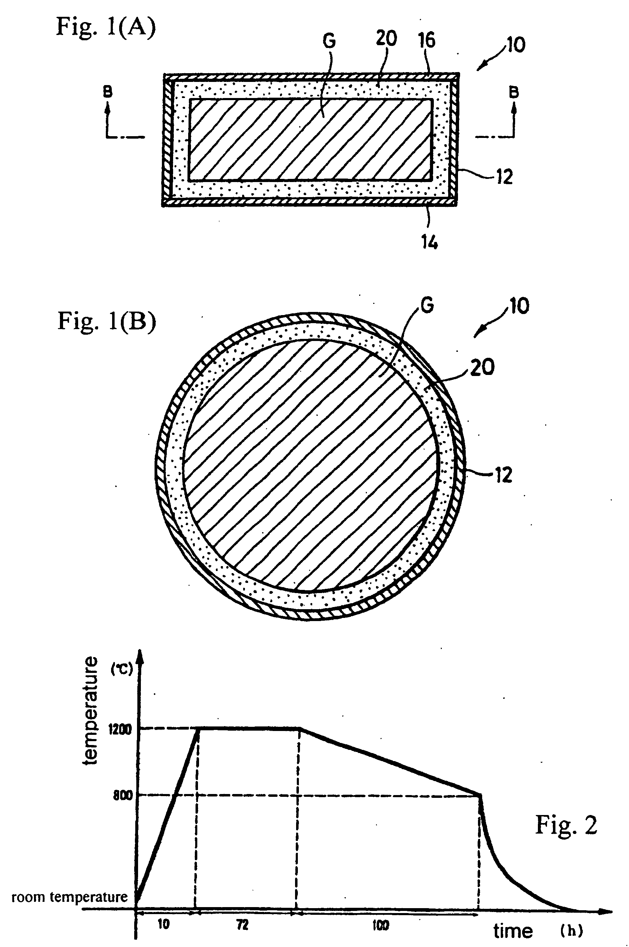

Referring to Fig. 1, the lidded vessel 10 is provided in a similar cylindrical shape to the flat cylindrical synthetic quartz glass body G that is enclosed inside the vessel as the object to be treated, and is equipped with a ring-shaped side wall 12, a disk-shaped bottom plate 14, and a disk-shaped lid 16. The ring-shaped side wall 12 and the bottom plate 14 may be provided as separate bodies or integrated into a monolithic body.

The volume of the lidded vessel 10 is at least 1.5 times larger than the volume of the synthetic quartz glass body to be treated therein, and particularly preferably, it is 2 to 10 times as large as the synthetic quartz glass body.

The synthetic quartz glass body G to be treated has a radius in the range of from 50 to 200 mm and a thickness in a range of from about 30 to 200 mm. Hence, the lidded vessel 10 preferably has a volume in a range of from 450 to 250,000 cm³. Furthermore, the vessel preferably has an outer diameter to the height ratio of 1.8 or more, and particularly preferably, 2.0 or more. Although there is no upper limitation concerning this ratio, a practical limit is thought to be about 10, so long as there is any opportunity of handling an extremely flat body.

The content of Na in the walls of the vessel 10 above is preferably 100 wt-ppb or lower, particularly 40 wt-ppb or lower, and more particularly, 5 wt-ppb or lower. Since the Na discharged from the vessel and the like is mostly trapped by the SiO₂ powder that is explained hereinafter, the quantity of Na reaching to the synthetic quartz glass body G is limited; however, the content of Na in the walls of the vessel 10 above is preferably set in the aforementioned range.

Furthermore, the production apparatus according to the present invention is equipped with SiO₂ powder 20 (see Fig. 1) that is charged inside the vessel 10 in such a manner that it covers the surface of the synthetic quartz glass body G to be treated. The SiO₂ powder used for this purpose can be obtained by doping the powder with hydrogen by high pressure hydrogen treatment, resulting in a mean dissolved hydrogen molecule concentration of 1 x 10¹⁹ molecules/cm³ or higher, and particularly preferably, 2 to 5 x 10¹⁹ molecules/cm³. The dissolved hydrogen molecule concentration may be a mean value of the entire SiO₂ powder to be used, and hence, there may be used a powder subjected to the hydrogen doping above mixed with a powder not subjected to the doping treatment.

The SiO₂ powder is provided to prevent escaping of hydrogen molecules from the synthetic quartz glass body G that treated during the heat treatment, and the total weight of the SiO₂ powder preferably accounts for 25 % or more, and more preferably, accounts for 50 to 200 % of the total weight of the total synthetic quartz glass body that is treated. If the total weight of the SiO₂ powder should account for less than 25 %, it becomes difficult to sufficiently achieve the object of preventing the discharge of hydrogen molecules from the synthetic quartz glass body. On the other hand, if the total weight of the SiO₂ powder should exceed 200 %, there causes an industrial excess for the achievement of the object, and this is not efficient.

The Na content in the SiO₂ powder is preferably 30 wt-ppb or lower, and particularly, 10 wt-ppb or lower. The less the Na content is, the more preferred. However, the lower limit achievable at present is about 5 wt-ppb.

As the SiO₂ powder above, preferably particles having a particle diameter in the range of 0.1 to 1000 µm, more preferably, 0.5 to 500 µm, account for 95 % or more of the total weight of the powder being used. If the powder contains more particles having a diameter exceeding 1000 µm, there is a fear of making it impossible to sufficiently dissolve hydrogen molecules inside a part of the powder in the aforementioned high pressure hydrogen treatment; on the other hand, if the powder contains more particles having a diameter less than 0.1 µm, there occurs unfavorable problems in handling. If the particle diameter of the powder should become too large, difficulties are found in increasing the packing density. Hence, also from this point of view, it is preferred to use a powder not exceeding 1000 µm in particle diameter. However, so long as the particle diameter falls in a range of from 0.1 to 1000 µm, there may be used a mixed powder containing particles differing in particle diameter, and preferably, a powder having a certain range in particle size distribution often increases the packing density. Still, however, the effect of the present invention can be achieved so long as the SiO₂ powder substantially consists of particles having the particle diameter falling in the range of the aforementioned particle diameter. More specifically, there is no practical problem so long as powder having a particle diameter falling out of the range defined above should account for 5 % by weight or less of the total weight of the SiO₂ powder.

Considering from the aforementioned conditions, particularly preferred is that the SiO₂ powder is a powder of synthetic quartz glass.

The method for producing a synthetic quartz glass for optical use by a heat treatment in a heating furnace according to the present invention comprises using the apparatus described above, and carrying out the heat treatment in a heating furnace on the synthetic quartz glass body that is to be treated, while covering the surface thereof with a SiO₂ powder having a mean dissolved hydrogen molecule concentration of 1 × 10¹⁹ molecules/cm³ or higher. The heat treatment can be performed in air. The conditions of the heat treatment, for instance, treating temperature, heating time, heating rate, cooling rate, etc., can be set at generally used values.

Thus, in accordance with the method of the present invention, there can be obtained a synthetic quartz glass for optical use having a dissolved hydrogen molecule concentration of 2 × 10¹⁷ molecules/cm³ or higher and yielding an initial transmittance for a radiation of 193.4 nm of 99.7 % or higher.

The dissolved hydrogen molecule concentration above is preferably 5 × 10¹⁷ molecules/cm³ or higher. If the dissolved hydrogen molecule concentration should be lower than 2 × 10¹⁷ molecules/cm³, the desired resistance against laser radiation would not be achieved. The upper limit for the dissolved hydrogen molecule concentration at present is about 5 × 10¹⁹ molecules/cm³.

In the synthetic quartz glass according to the present invention, the Na content is preferably 10 wt-ppb or lower, and particularly preferably, 5 wt-ppb or lower. Furthermore, the fluctuation in refractive index, Δn, in the radius direction is preferably 1.0 × 10⁻⁶ or smaller.

### Examples

A mode of practicing an embodiment of the present invention is explained below by partly making reference to the attached drawings. It should be understood, however, that the dimensions, materials, shapes, relative positions, etc., are only given for examples or explanatory means so long as there is otherwise stated, and are by no means limiting the present invention.

As a synthetic quartz glass for use as an optical member, four synthetic quartz glass bodies (object to be treated), each 200 mm in outer diameter and 60 mm in thickness, were prepared by direct method. These synthetic quartz glass bodies were all found to have a Na concentration of 5 wt-ppb or lower, an initial transmittance for a radiation 193.4 nm in wavelength of 99.8 %, and a hydrogen molecule concentration of 1.8 × 10¹⁸ molecules/cm³. The synthetic quartz glass bodies were subjected to a heat treatment in air under a temperature profile as shown in Fig. 2 in accordance with the method described below.

### Example 1

A 4-kg portion of a high purity synthetic quartz glass powder having an impurity Na concentration of 20 wt-ppb and almost free from hydrogen molecules, and consisting of particles 53 to 710 µm in particle diameter was subjected to high pressure hydrogen treatment in an autoclave at a temperature of 600 °C under a pressure of 100 atm for a duration of 100 hours. The mean hydrogen molecule concentration of the powder was obtained from the pressure difference before and after the treatment to obtain a value of 2.0 × 10¹⁹ molecules/cm³.

Then, in a synthetic quartz glass vessel 250 mm in outer diameter, 100 mm in height, and 5 mm in wall thickness, the synthetic quartz glass body above, i.e., the object to be heat treated, was placed inside the vessel in such a manner that it should be centered inside the vessel while charging 2.9 kg of the powder obtained above by high pressure hydrogen treatment in such a manner to bury the synthetic quartz glass body. Thus, the heat treatment was performed after placing a synthetic quartz glass sheet 250 mm in outer diameter and 5 mm in thickness on the synthetic quartz glass body buried in the powder. More specifically, referring to Fig. 1, the heat treatment was performed on the synthetic quartz glass and the powder placed inside the heat treatment furnace. In this case, the total weight of the synthetic quartz glass accounted for 70 % of the weight of the synthetic quartz glass body.

### Example 2

A heat treatment was performed in the same manner as in Example 1, except for using, instead of the high purity synthetic quartz glass powder, a naturally occurring quartz (rock crystal) powder obtained by purifying IOTA (trademark) powder consisting of particles 53 to 710 µm in particle diameter in a chlorine-containing atmosphere to control the Na concentration thereof to 50 wt-ppb. The naturally occurring quartz powder used in the present Example was found to have a mean hydrogen molecule concentration of 2.0 × 10¹⁹ molecules/cm³.

### Example 3

A heat treatment was performed in the same manner as in Example 1, except for using a powder subjected to high pressure hydrogen treatment containing mixed therein a synthetic quartz glass powder not subjected to the treatment, thereby controlling the mean hydrogen molecule concentration to 1.5 × 10¹⁹ molecules/cm³.

### Comparative Example 1

A synthetic quartz glass body which is the object to be treated was subjected to the heat treatment by simply covering the body with the same lidded vessel as that used in Example 1, (but without using any synthetic quartz glass powder), and by placing it inside the heat treatment furnace. The other conditions were the same as those used in Example 1.

### Comparative Example 2

A heat treatment was performed in the same manner as in Example 1, except for using the high purity synthetic quartz glass powder as it is without applying any high pressure hydrogen treatments.

### Comparative Example 3

A heat treatment was performed in the same manner as in Example 1, except for shortening the time duration of the high pressure hydrogen treatment of the high purity synthetic quartz glass powder to 5 hours. The synthetic quartz glass powder was found to have a hydrogen molecule concentration of 3.0 × 10¹⁸ molecules/cm³.

The physical properties and the like of the SiO₂ powder use for the covering are listed in Table 1.

**Table 1 Physical properties and the like of the SiO₂ powder used for filling the vessel.**

| | **Type of powder** | **Particle diameter of the powder (µm)** | **Na concentration (wt-ppb)** | **H**_{**2**} **molecule concentration (molecules/cm**^{**3**}**)** |
|---|---|---|---|---|
| **Example 1** | Synthetic quartz glass powder | 53 - 710 | 20 | 2 × 10¹⁹ |
| **Example 2** | Naturally occurring quartz powder | 53 - 710 | 50 | 2 × 10¹⁹ |
| **Example 3** | Synthetic quartz glass powder | 53 - 710 | 20 | 1.5 × 10¹⁹ |
| **Comp.Ex.1** | Not used | - | - | - |
| **Comp.Ex.2** | Synthetic quartz glass powder | 53 - 710 | 20 | - |
| **Comp.Ex.3** | Synthetic quartz glass powder | 53 - 710 | 20 | 3.0 × 10¹⁸ |

The hydrogen molecule (H₂) concentration, Na concentration, transmittance T (in %) for a 193.4 line, and the fluctuation in refractive index before and after the heat treatment Δn were measured for each of the heat treated synthetic quartz glass products obtained in the Examples and Comparative Examples. The results are summarized in the following table.

**Table 2 Properties of the quartz glass body befor1 e and after subjecting it to heat treatment**

| | **H**_{**2**} **concentration before treatment (molecules/cm**^{**3**}**)** | **H**_{**2**} **concentration after Treatment (molecules/cm**^{**3**}**)** | **Na concentrati on (wt-ppb)** | **193.4-nm line transmittance (T %)** |
|---|---|---|---|---|
| **Example 1** | 1.8 10¹⁸ | 7.2 × 10¹⁷ | 2 | 99.8 |
| **Example 2** | 1.8 × 10¹⁸ | 6.5 × 10¹⁷ | 5 | 99.7 |
| **Example 3** | 1.8 × 10¹⁸ | 4.0 × 10¹⁷ | 2 | 99.8 |
| **Comp.Ex.1** | 1.8 × 10¹⁸ | 1.4 × 10¹⁷ | 2 | 99.8 |
| **Comp.Ex.2** | 1.8 × 10¹⁸ | 1.1 × 10¹⁷ | 2 | 99.8 |
| **Comp.Ex.3** | 1.8 × 10¹⁸ | 1.6 × 10¹⁷ | 2 | 99.8 |

From Table 2 it can be clearly understood that the synthetic quartz glass for optical use obtained as the treated product in Example 1 yields a hydrogen molecule concentration of 7.2 × 10¹⁷ molecules/cm³, a Na concentration of 2 wt-ppb or lower, and an initial transmittance for a radiation at a wavelength of 193.4 nm of 99.8 %, and that it exhibits sufficiently high ultraviolet transmittance as an optical member for use in lithographic apparatuses.

The synthetic quartz glass for optical use obtained in Example 1 was also found to yield an extremely low value of 0.6 × 10⁻⁶ for the fluctuation in refractive index after the heat treatment Δn of the synthetic quartz glass body G. This is believed attributed to the fact that, in cooling during the heat treatment, the entire system inclusive of the vessel and the quartz powder functioned as the object to be treated, in which the synthetic quartz glass for optical use was located at the core portion having small temperature gradient. Furthermore, this method was found extremely economical because the vessel and the quartz powder can be reused.

The synthetic quartz glass for optical use obtained in Example 2 was found to yield a hydrogen molecule concentration of 6.5 × 10¹⁷ molecules/cm³, a Na concentration of 5 wt-ppb, and an initial transmittance for a radiation at a wavelength of 193.4 nm of 99.7 %. Thus, although somewhat inferior to the synthetic quartz glass obtained in Example 1, this product was also found to exhibit sufficiently high ultraviolet transmittance and hydrogen molecule concentration as an optical member for use in lithographic apparatuses.

Furthermore, concerning the fluctuation in refractive index Δn, the synthetic quartz glass for optical use obtained in Example 2 was found to yield an extremely low value of 0.8 × 10⁻⁶ as the same as Example 1.

The synthetic quartz glass for optical use obtained in Example 3 was found to yield a hydrogen molecule concentration of 4.0 × 10¹⁷ molecules/cm³, a value slightly inferior to that of the synthetic quartz glass obtained in Example 1; however, this product was also found to exhibit a sufficient hydrogen molecule concentration. The other characteristics were about the same as those obtained for the product obtained in Example 1.

On the other hand, the treated product obtained in Comparative Example 1 was found to yield a hydrogen molecule concentration of 1.4 × 10¹⁷ molecules/cm³, a Na concentration of 50 wt-ppb, and an initial transmittance for a radiation at a wavelength of 193.4 nm of 99.5 %. Thus, the product was found to yield an insufficient hydrogen molecule concentration and ultraviolet transmittance as an optical member for use in lithographic apparatuses. Further, in the treated product obtained in Comparative Example 1, the fluctuation in refractive index Δn was found to be 2.1 × 10⁻⁶, a value larger than those obtained on the products obtained in the Examples.

In Comparative Example 2, the hydrogen molecule concentration of the treated product was found to be 1.1 × 10¹⁷ molecules/cm³, a value lower than that of Comparative Example 1, but the product maintained a Na concentration of 2 wt-ppb, and the fluctuation in refractive index Δn was found to be 0.6 × 10⁻⁶, a value well comparable to that obtained on the product obtained in Example 1. As a result, this product was found to yield satisfactory value for the initial transmittance for a radiation at a wavelength of 193.4 nm of 99.8 %, as well as for the fluctuation in refractive index Δn; however, as an optical member for use in lithographic apparatuses, the hydrogen molecule concentration was found to be insufficient.

In Comparative Example 3, the hydrogen molecule concentration of the treated product was found to be lowered to 1.6 × 10¹⁷ molecules/cm³, and was hence insufficient for use as an optical member for use in lithographic apparatuses.

The effect of the present invention can be clearly understood from the results above. The physical properties in the examples and comparative examples below are values obtained in accordance with measuring methods and the like as follows.
(1) Concentration of hydrogen molecules: The value was obtained in accordance with the method described in V.S. Khotimchenko et al., J. Appl. Spectrosc., 46 (1987), pp. 632-635.
(2) Content of Na: Measurement was made by flameless atomic absorption spectroscopy.
(3) Initial transmittance for a radiation 193.4 nm in wavelength: A value obtained as a ratio of the measured apparent value T % reduced to a unit thickness (10 mm) to the theoretical transmittance 90.86 % for a radiation 193.4 nm in wavelength for a quartz glass, from which 0.18 % corresponding to the loss ascribed to Rayleigh scattering is subtracted; that is, a value expressed by (T/90.68) × 100.
(4) Measurement of the fluctuation in refractive index Δn: A value obtained by optical interferometry using a He-Ne laser (633 nm in wavelength) as the light source. The value is taken in an area of 180-mm diameter.
(5) Hydrogen molecule concentration in synthetic quartz glass powder: The pressure difference before and after the hydrogen treatment was measured, and the concentration was calculated by using the thus obtained value and the total weight of the synthetic quartz glass powder.
(6) Particle diameter of the synthetic quartz glass powder: The powder was classified by using JIS Nylon sieves provided with screens each having an opening of 53 µm and 710 µm.

Many aspects of the present invention employ known techniques, although employed in different contexts herein. Therefore, it should be understood that these known techniques and those associated with them may be employed in conjunction with the present invention, to the extent consistent therewith. It should also be understood that the various aspects of the invention may be employed together, individually or in subcombination.

## Claims

1. A method of heat treating a synthetic quartz glass body for optical use, which comprises heating the quartz glass body in a heating furnace while said quartz glass body is covered with an SiO₂ powder, the SiO₂ powder having a mean dissolved hydrogen molecule concentration of 1 × 10¹⁹ molecules/cm³ or higher.

2. A method as claimed in Claim 1, wherein the total weight of said SiO₂ powder accounts for 25 % or more of the weight of the synthetic quartz glass body.

3. A method as claimed in Claim 1 or Claim 2, wherein said SiO₂ powder is a synthetic SiO₂ powder containing 30 wt-ppb or less of Na.

4. A method as claimed in one of Claim 1 to 3, wherein at least 95 % of the weight of said SiO₂ powder consists of particles having a diameter of 1,000 µm or less.

5. A heat treatment apparatus for heat treating of a synthetic quartz glass body for optical use, which comprises a heating furnace and a quartz glass vessel for the reception of the quartz glass body to be placed inside the heating furnace, said quartz glass vessel
a) has a volume of at least 1.5 times of the volume of the synthetic quartz glass body,
b) to be filled with an SiO₂ powder having a mean dissolved hydrogen molecule concentration of 1 × 10¹⁹ molecules/cm³ or higher and thus covering the surface of the synthetic quartz glass body,
c) is covered by a lid.

6. A heat treatment apparatus as claimed in Claim 5, wherein the total weight of said SiO₂ powder accounts for 25 % or more of the weight of the synthetic quartz glass body.

7. A heat treatment apparatus as claimed in Claim 5 or Claim 6, wherein said SiO₂ powder is a synthetic SiO₂ powder containing 30 wt-ppb or less of Na.

8. A heat treatment apparatus as claimed in one of the Claims 5 to 7, wherein at least 95 % of the weight of said SiO₂ powder consists of particles having a diameter of 1,000 µm or less.

## Patentansprüche

1. Verfahren für die Wärmebehandlung eines Körpers aus synthetischem Quarzglas für eine Verwendung in der Optik, umfassend ein Aufheizen des Quarzglaskörpers in einem Heizofen, wobei der Quarzglaskörper eingebettet ist in SiO₂-Pulver, das eine mittlere Konzentration gelöster Wasserstoffmoleküle von 1 × 10¹⁹ Moleküle/cm³ oder mehr aufweist.

2. Verfahren nach Anspruch 1, **dadurch gekennzeichnet, dass** das Gesamtgewicht des SiO₂-Pulvers mindestens 25 % des Gewichts des synthetischen Quarzglaskörpers beträgt.

3. Verfahren nach Anspruch 1 oder 2, **dadurch gekennzeichnet, dass** das SiO₂₋Pulver ein synthetisches SiO₂-Pulver mit einem Na-Gehalt von 30 Gew.-ppb oder weniger ist.

4. Verfahren nach einem der Ansprüche 1 bis 3, **dadurch gekennzeichnet, dass** mindestens 95 Gew.-% des SiO₂-Pulvers aus Partikeln mit einem Durchmesser von 1000 µm oder weniger bestehen.

5. Wärmebehandlungsvorrichtung für die Wärmebehandlung eines synthetischen Quarzglaskörpers für die Optik, umfassend einen Heizofen und eine darin anzuordnende Form für die Aufnahme des Quarzglaskörpers, wobei die Form
a) ein Volumen aufweist, das mindestens das 1,5-fache des Volumens des synthetischen Quarzglaskörpers beträgt,
b) mit einem SiO₂-Pulver gefüllt wird, welches eine mittlere Konzentration gelöster Wasserstoffmoleküle von 1 × 10¹⁹ Molekülen/cm³ oder mehr aufweist, und welches dabei die Oberfläche des synthetischen Quarzglaskörpers bedeckt,
c) und die mit einem Deckel bedeckt ist.

6. Wärmebehandlungsvorrichtung nach Anspruch 5, **dadurch gekennzeichnet, dass** das Gesamtgewicht des SiO₂-Pulvers mindestens 25% des Gewichts des synthetischen Quarzglaskörpers beträgt.

7. Wärmebehandlungsvorrichtung nach Anspruch 5 oder 6, **dadurch gekennzeichnet, dass** das SiO₂-Pulver ein synthetisches SiO₂-Pulver mit einem Na-Gehalt von 30 Gew.-ppb oder weniger ist.

8. Wärmebehandlungsvorrichtung nach einem der Ansprüche 5 bis 7, **dadurch gekennzeichnet, dass** mindestens 95 Gew.% des SiO₂-Pulvers aus Partikeln mit einem Durchmesser von 1000 µm oder weniger bestehen.

## Revendications

1. Procédé de chauffage thermique d'un corps de verre de quartz synthétique pour un usage optique qui comprend le chauffage du corps de verre de quartz dans un four de chauffage tandis que ledit corps de verre de quartz est couvert d'une poudre SiO₂, la poudre SiO₂ ayant une concentration moyenne de molécules d'hydrogène supérieure ou égale à 1 × 10¹⁹ molécules/cm³.

2. Procédé tel que revendiqué dans la revendication 1, dans lequel le poids total de ladite poudre SiO₂ représente 25 % ou plus du poids du corps de verre de quartz synthétique.

3. Procédé tel que revendiqué dans la revendication 1 ou la revendication 2, dans lequel ladite poudre de SiO₂ est une poudre de SiO₂ synthétique contenant 30 ppb en poids ou moins de Na.

4. Procédé tel que revendiqué dans l'une des revendications 1 à 3, dans lequel au moins 95 % du poids de ladite poudre de SiO₂ sont composés de particules ayant un diamètre inférieur ou égal à 1.000 µm.

5. Appareil de chauffage pour le traitement thermique d'un corps de verre de quartz synthétique pour un usage optique, qui comprend un four de chauffage et un dit vaisseau de verre de quartz pour la réception du corps de verre de quartz devant être placé à l'intérieur du four de chauffage, ledit vaisseau de verre de quartz
a) ayant un volume d'au moins 1,5 fois le volume du corps de verre de quartz synthétique,
b) à remplir d'une poudre de SiO₂ ayant une concentration moyenne dissoute de molécules d'hydrogène supérieure ou égale de 1 × 10¹⁹ molécules/cm³ et couvrant ainsi la surface du corps de verre de quartz synthétique,
c) est recouvert par un couvercle.

6. Appareil de traitement thermique tel que revendiqué dans la revendication 5, dans lequel le poids total de ladite poudre de SiO₂ représente 25% ou plus du poids du corps de verre de quartz synthétique.

7. Appareil de traitement thermique tel que revendiqué dans la revendication 5 ou la revendication 6, dans lequel ladite poudre de SiO₂ est une poudre synthétique de SiO₂ contenant 30 ppb en poids ou moins de Na.

8. Appareil de traitement thermique tel que revendiqué dans l'une des revendications 5 à 7, dans lequel au moins 95 % du poids de ladite poudre SiO₂ sont constitués de particules ayant un diamètre inférieur ou égal à 1.0000 µm.
